# EUROPÄISCHE PATENTSCHRIFT

(11) **EP 3 273 785 B1**
(45) Veröffentlichungstag und Bekanntmachung des Hinweises auf die Patenterteilung: **19.12.2018**
(21) Anmeldenummer: 16712301.7
(22) Anmeldetag: 21.03.2016
(51) Int. Cl.: A22C 21/04, A22B 5/08

(54) **VORRICHTUNG UND VERFAHREN ZUM BRÜHEN VON GESCHLACHTETEM GEFLÜGEL**
DEVICE AND METHOD FOR SCALDING POULTRY CARCASSES
APPAREIL ET PROCÉDÉ D'ÉCHAUDAGE DE VOLAILLES ABATTUES

(30) Priorität: 26.03.2015 DE 102015104652
(43) Veröffentlichungstag der Anmeldung: 31.01.2018
(73) Patentinhaber: Linco Food Systems A/S, 8380 Trige (DK)
(72) Erfinder: THRANE, Uffe, 8450 Hammel (DK); BACH, Ole, 8400 Ebeltoft (DK)
(74) Vertreter: Stork Bamberger Patentanwälte PartmbB
(86) Internationale Anmeldenummer: PCT/EP2016/056113
(87) Internationale Veröffentlichungsnummer: WO 2016/150904

(56) Entgegenhaltungen:
- EP-A1- 1 787 519
- DE-T2- 60 102 369
- NL-C2- 1 009 188
- US-A1- 2009 215 368

## Beschreibung

Die Erfindung betrifft eine Vorrichtung, ausgebildet und eingerichtet zum Brühen von geschlachtetem Geflügel, umfassend einen länglichen, nach oben offenen Brühtank zur Aufnahme und zum Halten eines Brühmediums mit mindestens einer Transportstrecke für das Geflügel, wobei jede Transportstrecke in ihrer Längserstreckung an ein sich mindestens über einen Teil der Länge der Transportstrecke erstreckendes Trennelement grenzt, ein oberhalb des Brühtanks angeordnetes Transportmittel zum Transport des an den Füßen aufgehängten Geflügels entlang der Transportstrecke in Transportrichtung T, eine Steuer- und Regeleinheit zum Temperieren des Brühmediums, Mittel zum Erzeugen einer Verwirbelung und/oder Strömung des Brühmediums sowie eine Filtereinrichtung zum Reinigen des Brühmediums.
Des Weiteren betrifft die Erfindung ein Verfahren zum Brühen von geschlachtetem Geflügel, mit den Schritten: Transportieren des Geflügels G an den Füßen hängend durch einen mit Brühmedium mindestens teilweise gefüllten Brühtank mittels eines Transportmittels entlang einer Transportstrecke in Transportrichtung T, Temperieren des Brühmediums mittels einer Steuer- und Regeleinheit, Reinigen des Brühmediums mittels einer Filtereinrichtung, und Verwirbeln des Brühmediums mittels eines Mittels zum Erzeugen einer Verwirbelung und/oder Strömung.
Solche Vorrichtungen und Verfahren kommen in der Geflügel verarbeitenden Industrie zum Einsatz (vgl. z.B. das Dokument NL 1 009 188 C2), um das Gefieder des Geflügels, zu dem u.a. Hühnchen, Truthähne, Enten, Gänse und andere in der Nahrungsmittelindustrie zu verarbeitende Vögel und Wasservögel zählen, für das eigentliche Entfiedern bzw. Rupfen der Federn vorzubereiten, indem die Federn durch das erwärmte/erhitzte Brühmedium im Bereich der Federkiele quasi aufgeweicht bzw. angelöst werden. Dazu wird das Geflügel einem warmen bzw. heißen Wasserdampf ausgesetzt oder, wie in der gattungsbildenden Vorrichtung, durch einen mit Brühmedium gefüllten Brühtank transportiert. Beim Transport des an den Füßen aufgehängten Geflügels entlang der Transportstrecke in Transportrichtung T taucht jeder Geflügelkörper teilweise oder ganz in das Brühmedium ein und wird von diesem umspült. Das Brühmedium, in der Regel Wasser, kann durch zusätzlich in das Brühmedium eingebrachte Luft oder Zusatzstoffe angereichert sein.

Aus der EP 1 787 519 A1 ist eine Brühvorrichtung mit den Merkmalen des Oberbegriffes des Anspruches 1 bekannt. Bei dieser Vorrichtung ist der Brühtank durch eine Trennwand in zwei Transportstrecken geteilt. Zu beiden Seiten der Trennwand sind im Bereich des Brühtankbodens nach oben gerichtete Düsen als Mittel zum Erzeugen einer Verwirbelung und/oder Strömung des Brühmediums angeordnet. Mittels dieser Düsen ist ein vertikal nach oben, über das Geflügel hinaus gerichteter Strom des Brühmediums erzeugbar. Führungsmittel im oberen Bereich des Brühtanks sorgen dafür, dass dieser Strom umgelenkt und nach unten in Richtung des Geflügels gerichtet wird. Die Trennwand als Wärmetauscher innerhalb des Brühtanks dient bei der bekannten Vorrichtung als Steuer- und Regeleinheit zum Temperieren des Brühmediums. Damit ist das entlang der Transportstrecken transportierte Geflügel unmittelbar der Strahlungswärme des Wärmetauschers ausgesetzt, wenn das Geflügel an der Trennwand vorbei transportiert wird. Das kann zu einer Überhitzung des Geflügels und damit zur Beschädigung der Haut und des Fleisches führen. Durch das Erzeugen einer Strömung des Brühmediums mittels der Düsen wird das Brühmedium insbesondere auch an der Oberfläche des Brühmediums im Brühtank aufgewühlt, wodurch es zu einem Wärmeverlust an der Oberfläche des Brühmediums kommt, der durch die Zuführung zusätzlicher Energie kompensiert werden muss. Ein weiterer Nachteil besteht darin, dass die Düsen als Mittel zum Erzeugen der Strömung des Brühmediums ohnehin einen hohen Energieeinsatz erfordern, zumal eine Vielzahl von Düsen entlang der Transportstrecke notwendig ist, um über die gesamte Länge die erforderliche Strömung zu erzeugen. Im Übrigen ist die Vorrichtung gemäß EP 1 787 519 A nur schwer zu reinigen.
Der Erfindung liegt somit die Aufgabe zugrunde, eine in der Herstellung und im Betrieb kostengünstige sowie einfach zu handhabende Vorrichtung zum Brühen von geschlachtetem Geflügel zu schaffen. Die Aufgabe besteht weiterhin darin, ein entsprechendes Verfahren vorzuschlagen.

Diese Aufgabe wird durch die Vorrichtung gemäß Anspruch 1 dadurch gelöst, dass jedes Trennelement zwei beabstandet zueinander angeordnete und sich von der Bodenwand des Brühtanks nach oben erstreckende Trennwände zur Bildung eines nach oben und zu den Stirnseiten hin offenen Kanals umfasst, und innerhalb des Kanals im Bereich von Durchbrüchen in jeder einer Transportstrecke zugewandten Trennwand ein Verwirbelungskörper als Mittel zur Erzeugung der Verwirbelung und/oder Strömung des Brühmediums angeordnet ist, der mittels einer horizontal gerichteten und quer zur Transportrichtung T des Geflügels verlaufenden Antriebswelle rotierend antreibbar ist. Der durch die Trennwände gebildete und von der oder jeder Transportstrecke mindestens teilweise abgeschirmte Kanal ist sowohl nach oben als auch zu den beiden Stirnseiten offen, so dass das Brühmedium innerhalb des gesamten Brühtanks - im Ruhezustand des Verwirbelungskörpers - ein einheitliches Niveau aufweist, also innerhalb des Kanals das gleiche Niveau aufweist, wie in den Transportstrecken, da eine offene Verbindung zwischen der oder jeder Transportstrecke und dem oder jedem Kanal besteht. Im Bereich der Durchbrüche in den Trennwänden besteht ebenfalls eine Verbindung zwischen der Transportstrecke und dem Kanal zum Durchtritt des Brühmediums. Dadurch, dass der Verwirbelungskörper außerhalb der Transportstrecken innerhalb des Kanals angeordnet ist, kann das Brühmedium durch die Rotation des Verwirbelungskörpers vom Boden der Transportstrecke durch die Durchbrüche angesaugt werden, wodurch innerhalb des Kanals über seine gesamte Länge ein Überdruck entsteht. Durch das Saugen des Brühmediums in den Kanal hinein kann das Geflügel darin unterstützt werden, in einer im Wesentlichen vertikalen Ausrichtung zu bleiben, um ein Aufschwimmen des Geflügels zu verhindern. Durch den Überdruck innerhalb des Kanals wird das Brühmedium aus dem Kanal an den offenen Stirnseiten und/oder an der offenen Oberseite herausgedrückt, so dass das Geflügel in optimaler Weise dem Brühmedium ausgesetzt ist. Mit der horizontalen Ausrichtung der Antriebswelle quer zur Transportrichtung T des Geflügels, also auch quer zur Längserstreckung der Transportstrecken, ist es zum einen möglich, unterschiedliche Größen des Verwirbelungskörpers vorzusehen. Zum anderen können durch diese erfindungsgemäße Ausbildung auf derselben Antriebswelle mehrere Verwirbelungskörper angeordnet sein, die alle mittels eines einzigen Antriebs rotierend antreibbar sind. Dadurch sind ein kostengünstiger Aufbau sowie ein kostengünstiger Betrieb der Vorrichtung gewährleistet.

Eine besonders bevorzugte Weiterbildung der Erfindung zeichnet sich dadurch aus, dass in dem Brühtank mindestens zwei parallel verlaufende Transportstrecken ausgebildet sind, die in ihrer Längserstreckung durch das Trennelement mindestens teilweise voneinander getrennt sind. Die oder jede Trennwand des Trennelementes ist zumindest im Umkehrpunkt des Transportmittels beim Wechsel von einer ersten Transportstrecke in die benachbarte Transportstrecke beabstandet zur Außenwand des Brühtanks ausgebildet, um dem Geflügel den Durchtritt bzw. den Wechsel von einer Transportstrecke zur nächsten Transportstrecke zu ermöglichen. Durch die Duplizierung der Transportstrecke wird der Verbleib des Geflügels in dem Brühmedium verlängert, ohne den Ausstoß fertig gebrühter Geflügelkörper am Ausgang der Vorrichtung zu reduzieren.

Vorteilhafterweise sind in dem Brühtank mehr als zwei parallel verlaufende Transportstrecken ausgebildet, wobei zwei benachbarte Transportstrecken jeweils durch ein Trennelement mindestens teilweise voneinander getrennt sind. Mit dieser Ausbildung wir der zuvor beschriebene Effekt noch weiter verstärkt.

Eine besonders zweckmäßige Ausführungsform der Erfindung ist dadurch gekennzeichnet, dass der Verwirbelungskörper mindestens einen Impeller, Propeller oder dergleichen umfasst. Besonders bevorzugt ist eine Vortex-Wasserturbine als Verwirbelungskörper, die bei einer geringen Umdrehungszahl (z.B. 300 U/min) eine sehr hohe Pumpleistung aufweist und somit für eine energieeffiziente Erzeugung der Verwirbelung und/oder Strömung sorgt. Ein besonderer Vorteil der erfindungsgemäßen Ausführung liegt darin, dass durch den Impeller, Propeller bzw. die Turbine aufgrund der hohen Pumpleistung eine einzige - vorzugsweise zentral angeordnete - Pumpstation ausreicht, um eine ausreichende Verwirbelung/Strömung innerhalb der Vorrichtung mit einer Länge von bis zu 10m zu erzeugen.

Zweckmäßigerweise umfasst der Verwirbelungskörper mindestens zwei Impeller, Propeller oder dergleichen, die auf derselben Antriebswelle angeordnet sind. Durch die horizontal und quer zur Transportrichtung T ausgerichtete Antriebswelle können eine Vielzahl von Verwirbelungskörpern auf derselben Antriebswelle angeordnet sein, so dass Brühvorrichtungen mit bis zu acht Transportstrecken, vorzugsweise mit zwei bis vier Transportstrecken, über diese eine zentrale Pumpstation, die durch die Antriebswelle, die darauf angeordneten Verwirbelungskörper und den Antrieb für die Antriebswelle gebildet ist, besonders kosteneffizient betrieben werden können.

Eine bevorzugte Weiterbildung der Erfindung ist dadurch gekennzeichnet, dass an beiden Stirnseiten jedes Kanals im Bereich der Trennwände jeweils mindestens ein Umlenkelement zum Umlenken des an den Stirnseiten aus dem Kanal strömenden Brühmediums in Transportrichtung T des Geflügels angeordnet ist. Dabei ist das Umlenkelement jeweils so an den Stirnseiten angeordnet und ausgerichtet, dass das aus dem Kanal strömende Brühmedium nur zu einer Transportstrecke geleitet wird. Durch die Umlenkelemente strömt das Brühmedium jeweils in Transportrichtung T in die Transportstrecken hinein. Anders ausgedrückt kann das Geflügel stets mit der Strömungsrichtung des Brühmediums in der Transportstrecke transportiert werden, wodurch das Aufschwimmen des Geflügels wirksam verhindert wird.

Eine vorteilhafte Ausführungsform zeichnet sich dadurch aus, dass im Bereich des nach oben offenen Kanals Prallelemente zum Umlenken des nach oben aus dem Kanal strömenden Brühmediums nach unten in Richtung des Geflügels angeordnet sind. Damit kann zum einen Druck von oben auf das Geflügel ausgeübt werden. Dieser durch den Brühmediumstrom erzeugte Druck führt dazu, dass das Geflügel in der im Wesentlichen vertikal nach unten hängenden Ausrichtung verbleibt und ein Aufschwimmen des Geflügels verhindert wird, so dass das Geflügel stets maximal in das Brühmedium eintaucht. Zum anderen kann das Brühmedium durch diese Ausbildung direkt in den Bereich der Federkiele strömen, um das Anlösen der Federn zu verbessern.

Vorteilhafterweise erstrecken sich die Prallelemente im Wesentlichen über die gesamte Länge des Kanals und sind wahlweise zum Umlenken des Brühmediums aus dem Kanal zu der einen und/oder zu der anderen Transportstrecke ausgebildet und eingerichtet. Das bedeutet, dass ein Prallelement oder mehrere Prallelemente vorgesehen sind, die an der oberen Kante der Trennwände angeordnet sind und das nach oben aus dem Kanal strömende Brühmedium umlenken, und zwar je nach Ausbildung und Anordnung der Prallelemente entweder zu der einen Seite und/oder zu der anderen Seite des Kanals, so dass das Brühmedium entweder in eine der beiden Transportstrecken oder in beide Transportstrecken strömt, so dass das Geflügel über die gesamte Länge der Transportstrecken von oben mit einem Brühmediumstrom beaufschlagt wird.

Eine zweckmäßige Weiterbildung ist dadurch gekennzeichnet, dass die beiden einen Kanal bildenden Trennwände zu Wartungs- und/oder Reinigungszwecken schwenkbar ausgebildet sind. Dadurch werden die Wartung der Vorrichtung und insbesondere die Reinigung des Brühtanks wesentlich vereinfacht.

Vorteilhafterweise ist jede Trennwand im Bereich der Bodenwand des Brühtanks mit einem Scharnier oder dergleichen zum Schwenken der Trennwände aus einer parallelen Betriebsstellung in eine V-förmige Wartungs- und/oder Reinigungsstellung und zurück versehen. Anders ausgedrückt sind die Trennwände am Boden des Brühtanks mit Scharnieren befestigt. Anstelle der Scharniere sind auch andere eine Schwenkbewegung ermöglichenden Komponenten einsetzbar. Mit dieser Ausbildung ist das Reinigen des Kanals besonders einfach ausführbar.
Eine bevorzugte Ausführungsform ist dadurch gekennzeichnet, dass jeder Verwirbelungskörper im Bereich der Durchbrüche gegenüber den Transportstrecken durch ein für das Brühmedium durchlässiges Schutzelement abgeschirmt ist. Dadurch wird die Gefahr einer Kollision des Geflügels mit einem Verwirbelungskörper beim Transport entlang der Transportstrecke wirksam verhindert.

In einer besonders bevorzugten Ausführungsform der Erfindung ist mindestens eine Wärmequelle der Steuer- und Regeleinheit zum Temperieren des Brühmediums innerhalb des Kanals angeordnet. Dadurch ist das Geflügel gegenüber der Wärmequelle, z.B. eines Wärmetauschers der Steuer- und Regeleinheit abgeschirmt, wodurch Beschädigungen des Geflügels vermieden werden. Das in dem Kanal erwärmte/erhitzte Brühmedium wird vor dem Auftreffen auf das Geflügel mit dem im Brühtank befindlichen Brühmedium vermischt, bevor es auf das Geflügel trifft, wodurch eine gleichmäßige Wärmeverteilung für einen das Geflügel schonenden und dennoch effektiven Brühvorgang zur Verbesserung der Qualität erreicht wird.

Die Aufgabe wird auch durch ein Verfahren gemäß Anspruch 13 dadurch gelöst, dass das Brühmedium in einem von der oder jeder Transportstrecke mindestens teilweise abgeschirmten Kanal mittels eines Verwirbelungskörpers, der um eine horizontal gerichtete und quer zur Transportrichtung T verlaufende Antriebswelle rotierend angetrieben wird, verwirbelt und dann wieder der oder jeder Transportstrecke zugeführt wird.
Vorzugsweise wird das Brühmedium aus der oder jeder Transportstrecke mittels des Verwirbelungskörpers in den Kanal gesaugt und dadurch in dem Kanal ein Überdruck erzeugt, der dafür sorgt, dass das Brühmedium an den Stirnseiten und/oder an der Oberseite des Kanals austritt und wieder den Transportstrecken zugeführt wird.

Eine vorteilhafte Weiterbildung zeichnet sich dadurch aus, dass das aus den Stirnseiten des Kanals austretende Brühmedium durch Umlenkelemente derart umgelenkt wird, dass das austretende Brühmedium in Transportrichtung T des Geflügels G strömt.

Zweckmäßigerweise wird das nach oben aus dem Kanal austretende Brühmedium durch Prallelemente derart umgelenkt wird, dass das hängende Geflügel G durch das austretende Brühmedium von oben nach unten mit diesem beaufschlagt wird.

Eine bevorzugte Variante sieht vor, dass das Geflügel G entlang der Transportstrecken durch einen nur gering mit Brühmedium befüllten Brühtank transportiert wird, so dass das Geflügel G gar nicht oder nur geringfügig in das Brühmedium eintaucht und vollständig oder überwiegend durch das oben aus dem Kanal strömende Brühmedium mit diesem beaufschlagt wird. Dadurch wird der Effekt des Aufschwimmens des Geflügels vollständig vermieden und die Federn werden gegen die Wuchsrichtung direkt im Bereich der Federkiele mit dem Brühmedium beaufschlagt.

Eine alternative Variante sieht vor, dass das Geflügel G entlang der Transportstrecken durch einen voll mit Brühmedium befüllten Brühtank transportiert wird, so dass das Geflügel G vollständig in das Brühmedium eintaucht und durch das in den Transportstrecken stehende und durch das oben und/oder an den Stirnseiten aus dem Kanal strömende Brühmedium mit diesem beaufschlagt. Durch das hohe Niveau des Brühmediums mit einer nur geringen Verwirbelung der Oberfläche des Brühmediums wird der Wärmeverlust vom Brühmedium an die Umgebung relevant reduziert.

Vorteilhafterweise wird das Brühmedium innerhalb des Kanals durch die Steuer- und Regeleinheit temperiert, wobei sich das in dem Kanal temperierte Brühmedium beim Ausströmen aus dem Kanal mit dem in den Transportstrecken befindlichen Brühmedium vermischt und diese Brühmediummischung dann auf das Geflügel G trifft.

Eine besonders vorteilhafte Weiterbildung sieht vor, dass das Verfahren mit einer Vorrichtung nach einem der Ansprüche 1 bis 12 ausgeführt wird

Die sich aus den erfindungsgemäßen Verfahrensschritten ergebenden Vorteile wurden bereits im Zusammenhang mit der erfindungsgemäßen Vorrichtung, die sich besonders gut zur Durchführung des Verfahren eignet, beschrieben, weshalb zur Vermeidung von Wiederholungen auf die entsprechenden Passagen verwiesen wird.

Weitere zweckmäßige und/oder vorteilhafte Merkmale und Weiterbildung der Erfindung ergeben sich aus den Unteransprüchen sowie der Beschreibung. Eine besonders bevorzugte Ausführungsform der Erfindung wird anhand der beigefügten Zeichnung näher erläutert. In der Zeichnung zeigt:
- Fig. 1: eine schematische Darstellung der erfindungsgemäßen Vorrichtung in perspektivischer Ansicht von schräg oben und vorne,
- Fig. 2: die Vorrichtung gemäß Figur 1 in Draufsicht,
- Fig. 3: eine vergrößerte Darstellung des Ausschnitts III gemäß Figur 2,

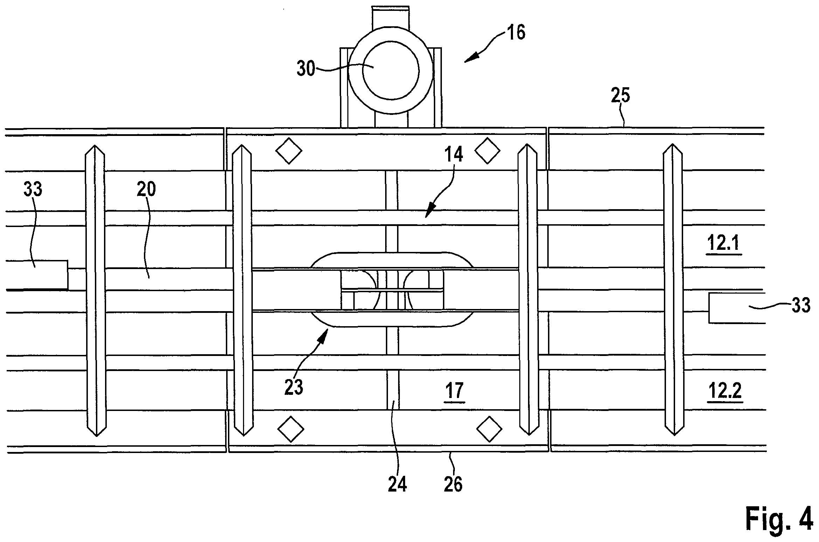

- Fig. 4: eine vergrößerte Darstellung des Verwirbelungskörpers in Draufsicht,

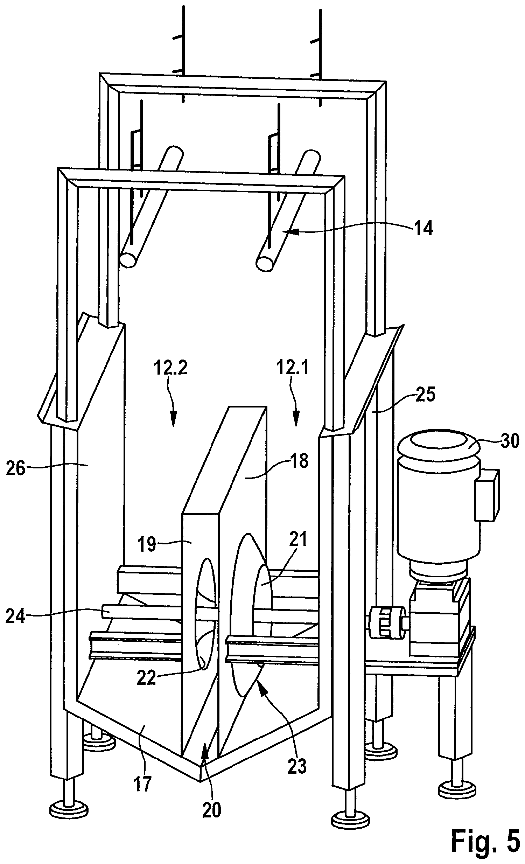

- Fig. 5: eine vergrößerte Darstellung des Verwirbelungskörpers in perspektivischer Ansicht,
- Fig. 6: die Vorrichtung gemäß Figur 2 im Schnitt VI-VI,
- Fig. 7: die Vorrichtung gemäß Figur 2 im Schnitt VII-VII,
- Fig. 8: eine perspektivische Detailansicht eines Abschnitts einer Transportstrecke, wobei zur Verdeutlichung der Ansicht eine Außenwand des Brühtanks entfernt ist, und
- Fig. 9: eine schematische Darstellung des Wirkungsprinzips einer Vortex-Wasserturbine.

Die in der Zeichnung dargestellte Vorrichtung dient zum Brühen von Kopf über nach unten hängenden Hühnchen, die innerhalb des Brühtanks mit einem sehr hohen Niveau des Brühmediums transportiert werden, nämlich derart, dass sich die Hühnchen vollständig unterhalb der Oberfläche des Brühmediums befinden, so dass die Hühnchen durch das in den Transportstrecken stehende Brühmedium und zusätzlich durch das an den Stirnseiten und oben aus dem Kanal strömende Brühmedium beaufschlagt werden. Selbstverständlich kann das Niveau des Brühmediums auch niedriger sein, derart, dass die Hühnchen gar nicht oder nur teilweise in das Brühmedium eintauchen, beispielsweise bis zum Hals, so dass die Hühnchen ausschließlich oder überwiegend durch das von oben aus dem Kanal strömende Brühmedium beaufschlagt werden. Die Erfindung ist in entsprechender Weise auch für Truthähne, Ente, Gänse und andere Vögel und Wasservögel einsetzbar.

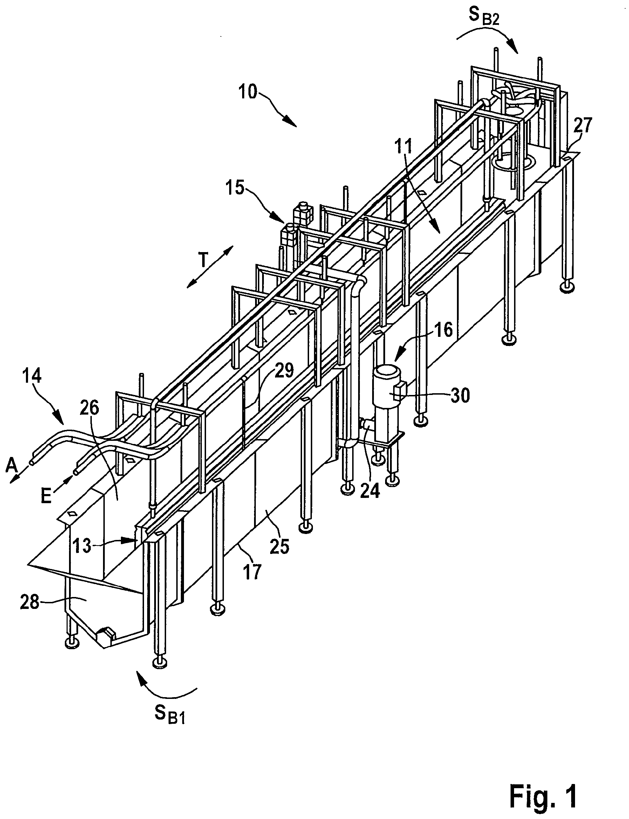

In der Figur 1 ist eine Vorrichtung 10 dargestellt, die zum Brühen von geschlachtetem Geflügel G, ausgebildet und eingerichtet ist. Die Vorrichtung 10 umfasst einen länglichen, nach oben offenen Brühtank 11 zur Aufnahme und zum Halten eines Brühmediums mit mindestens einer Transportstrecke 12.1 für das Geflügel G, wobei jede Transportstrecke 12.1 in ihrer Längserstreckung an ein sich mindestens über einen Teil der Länge der Transportstrecke 12.1 erstreckendes Trennelement 13 grenzt. Weiterhin umfasst die Vorrichtung 10 ein oberhalb des Brühtanks 11 angeordnetes Transportmittel 14 zum Transport des an den Füßen aufgehängten Geflügels G entlang der Transportstrecke 12.1 in Transportrichtung T sowie eine Steuer- und Regeleinheit 15 zum Temperieren des Brühmediums. Des Weiteren umfasst die Vorrichtung 10 Mittel 16 zum Erzeugen einer Verwirbelung und/oder Strömung des Brühmediums sowie eine Filtereinrichtung 35 zum Reinigung des Brühmediums.

Diese Vorrichtung 10 zeichnet sich erfindungsgemäß dadurch aus, dass jedes Trennelement 13 zwei beabstandet zueinander angeordnete und sich von der Bodenwand 17 des Brühtanks 11 nach oben erstreckende Trennwände 18,19 zur Bildung eines nach oben und zu den Stirnseiten S_{K1},S_{K2} hin offenen Kanals 20 umfasst, und innerhalb des Kanals 20 im Bereich von Durchbrüchen 21, 22 in jeder einer Transportstrecke 12.1 zugewandten Trennwand 18, 19 ein Verwirbelungskörper 23 als Mittel 16 zur Erzeugung der Verwirbelung und/oder Strömung des Brühmediums angeordnet ist, der mittels einer horizontal gerichteten und quer zur Transportrichtung T des Geflügels G verlaufenden Antriebswelle 24 rotierend antreibbar ist. Ein einzelner Verwirbelungskörper 23 kann sich über die gesamte Kanalbreite erstrecken, so dass sich der einzige Verwirbelungskörper 23 in den Bereich beider Durchbrüche 21, 22 erstreckt. Es kann aber auch im Bereich jedes Durchbruches 21, 22 ein separater Verwirbelungskörper 23 angeordnet sein.

Die im Folgenden beschriebenen Merkmale und Weiterbildungen stellen für sich betrachtet oder in Kombination miteinander bevorzugte Ausführungsformen dar. Es wird ausdrücklich darauf hingewiesen, dass Merkmale, die in den Ansprüchen und/oder der Beschreibung zusammengefasst oder in einer gemeinsamen Ausführungsform beschrieben sind, auch funktional eigenständig die weiter oben beschriebene Vorrichtung 10 weiterbilden können.

Der Brühtank 11 ist ein wannenartiger Körper, der nach unten durch die Bodenwand 17 und seitlich durch die Seitenwände 25, 26 begrenzt ist. Der Brühtank 11 erstreckt sich in Transportrichtung T in Längsrichtung. Die gegenüber den Seitenwänden 25, 26 deutlich kürzeren Stirnwände 27, 28 begrenzen den Brühtank 11 zur Bildung des Aufnahmevolumens für das Brühmedium, so dass dieses aufgenommen und gehalten, also bevorratet werden kann. Das Brühmedium kann Wasser oder ein anderes Fluid sein, beispielsweise mit mindestens einem Zusatzstoff angereichertes Wasser oder dergleichen. Die Bodenwand 17 kann horizontal und eben oder, wie in der Figur 1 dargestellt, auch V-förmig ausgebildet sein. Der Brühtank 11 kann einstückig oder modular bzw. segmentartig ausgebildet sein und weist in der dargestellten Variante eine Gesamtlänge von bevorzugt ca. 8m auf. Die Dimensionen des Brühtanks 11 können aber variieren.

Bei der in der Zeichnung dargestellten Vorrichtung 10 sind in dem Brühtank 11 mindestens zwei parallel verlaufende Transportstrecken 12.1, 12.2 ausgebildet, die in ihrer Längserstreckung durch das Trennelement 13 mindestens teilweise voneinander getrennt sind. An einer der Stirnseiten S_{B1} des Brühtanks 11 erfolgt sowohl die Eingabe als auch die Ausgabe des Geflügels G. Das Transportmittel 14 ist in der bevorzugten Ausführungsform ein als über-Kopf-Förderer ausgebildeter Hängeförderer, an dem das Geflügel G mit den Füßen in Schäkeln 29 hängend entlang der Transportstrecken 12.1, 12.2 gefördert wird. Der Hängeförderer bzw. dessen Förderschiene ist meanderförmig geführt, derart, dass die Förderschiene an der der Eingabe und Ausgabe gegenüberliegenden Stirnseite S_{B2} um 180° umgelenkt ist, um dem Geflügel G den Wechsel von der einen Transportstrecke 12.1 in die andere Transportstrecke 12.2 zu ermöglichen. Entsprechend ist das Trennelement 13 mindestens auf der der Stirnseite S_{B2} zugewandten Seite beabstandet zur Stirnwand 27 des Brühtanks 11 ausgebildet. In der zuvor beschriebenen Weise sind auch Vorrichtungen 10 ausgebildet, bei denen in dem Brühtank 11 mehr als zwei parallel verlaufende Transportstrecken 12.1, 12.2,.....12.n ausgebildet sind. In diesem Fall sind zwei benachbarte Transportstrecken 12.1, 12.2,.....12.n jeweils durch ein Trennelement 13 mindestens teilweise voneinander getrennt. Der Hängeförderer bzw. dessen Förderschiene ist entsprechend meanderförmig gelenkt. Für den Fall, dass mehr als zwei Transportstrecken 12.1, 12.2,....12.n vorgesehen sind, ist jedes Trennelement 13 auch auf der Stirnseite S_{B1} im Bereich der Eingabe und Ausgabe beabstandet zur Stirnwand 28 des Brühtanks 11 ausgebildet.

Der Verwirbelungskörper 23 ist im dargestellten Ausführungsbeispiel zentral angeordnet. Anders ausgedrückt ist der oder jeder Verwirbelungskörper 23 etwa mittig bezogen auf die Länge der Transportstrecken 12.1, 12.2,....12.n zentral auf einer einzelnen Antriebswelle 24 angeordnet, die mittels eines einzelnen Antriebs 30 rotierend antreibbar ist. Die Antriebswelle 24 ist in den Seitenwänden 25, 26 des Brühtanks 11 und optional zusätzlich in den Trennwänden 18, 19 des Trennelementes 13 gelagert. Der Verwirbelungskörper 23 umfasst mindestens einen Impeller oder einen Propeller oder eine Turbine oder ein anderes Verwirbelungselement. Besonders bevorzugt umfasst der Verwirbelungskörper 23 mindestens eine Vortex-Wasserturbine, die zwischen den beiden Trennwänden 18, 19 im Bereich der Durchbrüche 21, 22 angeordnet ist und bei geringer Umdrehungszahl (z.B. von 300U/min) ein sehr hohes Pumpvolumen aufweist. Beim Einsatz einer Vortex-Wasserturbine kann diese ein Rotorblatt oder zwei Rotorblätter aufweisen. Für den Fall, dass zwei Rotorblätter vorgesehen sind, können diese durch eine Trennwand oder dergleichen voneinander getrennt sein. Wenn die Vortex-Wasserturbine nur ein Rotorblatt aufweist, das dann auch nur einer Trennwand 18, 19 zugewandt ist, wird auch nur Brühmedium aus der Transportstrecke 12.1, 12.2,....12.n gesaugt, zu der das Rotorblatt gerichtet ist. Wenn zwei Rotorblätter die Vortex-Wasserturbine bilden, ist beiden benachbart zum Kanal 20 liegenden Transportstrecken 12.1, 12.2,...12.n ein Rotorblatt zugeordnet, mittels dem das Brühmedium zur Erzeugung des Überdrucks innerhalb des Kanals 20 abgesaugt werden kann. Alternativ kann der oder jeder Verwirbelungskörper 23 auch außermittig und insbesondere an den Stirnseiten S_{K1}, S_{K2} des Kanals 20 angeordnet sein. Für den Fall, dass der Verwirbelungskörper 23 eine Vortex-Wasserturbine ist, kann diese bevorzugt an der der Eingabe E und Ausgabe A zugewandten Stirnseite S_{K1} des Kanals 20 in diesem angeordnet sein.

Im Bereich eines vorzugsweise U-förmigen Kanals 20 kann der Verwirbelungskörper 23 in einer Trennwand 18, 19 oder in beiden Trennwänden 18, 19 im Bereich der Durchbrüche 21, 22 einen Impeller oder einen Propeller aufweisen. Für den Fall, dass mehrere Kanäle 20 parallel und beabstandet nebeneinanderliegen, besteht die Möglichkeit, dass in jedem Kanal 20 eine Vortex-Wasserturbine oder ein oder zwei Impeller oder Propeller angeordnet sind, wobei sämtliche Vortex-Wasserturbinen und/oder Impeller und/oder Propeller einer Vorrichtung 10 auf derselben Antriebswelle 24 angeordnet sind. Optional können auch mehrere Brühtanks 11 als Module nebeneinander angeordnet sein, so dass sich eine Antriebswelle 24 durch mehrere Brühtanks 11 hindurch erstreckt und in diesen gelagert ist, um alle Verwirbelungskörper 23 einer aus zwei oder mehr Brühtanks 11 bestehenden Anordnung zu tragen und anzutreiben.

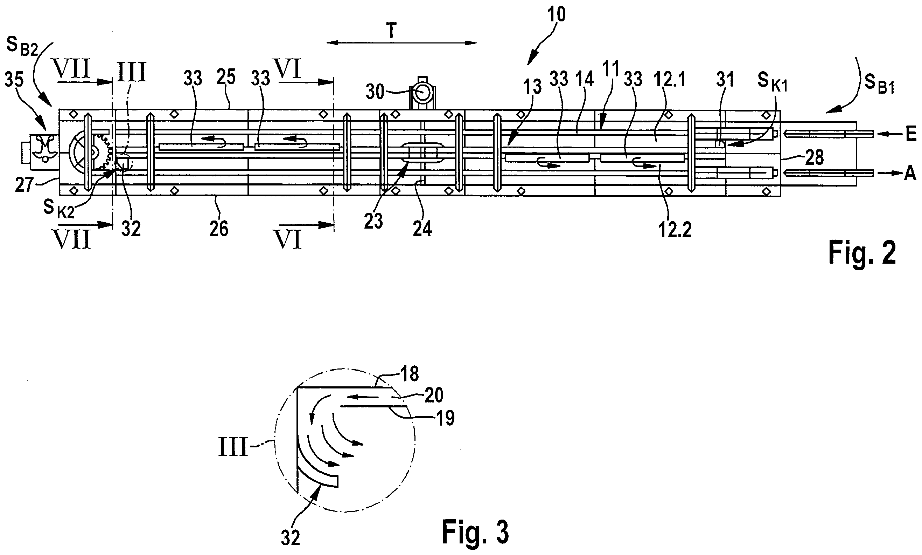

Vorzugsweise ist an beiden Stirnseiten S_{K1}, S_{K2} jedes Kanals 20 im Bereich der Trennwände 18, 19 jeweils mindestens ein Umlenkelement 31, 32 zum Umlenken des an den Stirnseiten S_{K1}, S_{K2} aus dem Kanal 20 strömenden Brühmediums in Transportrichtung T des Geflügels G angeordnet. In der Figur 3 ist eine einfache Ausführungsform eines Umlenkelementes 31 dargestellt, das am Ende des U-förmigen Kanals 20 an einer Trennwand 18, 19 angeordnet ist und den durch den Verwirbelungskörper 23 erzeugten Strom des Brühmediums derart umlenkt, dass das Brühmedium in den Transportstrecken 12.1, 12.2,....12.n der Transportrichtung T des Geflügels G in horizontaler Richtung folgt. Die Umlenkung kann auch durch andere, z.B. zu den Trennwänden 18,19 separate Umlenkelemente oder dergleichen erfolgen. Des Weiteren besteht die Möglichkeit, auch nur an einer der beiden Stirnseiten S_{K1}, S_{K2} des Kanals 20 ein Umlenkelement 31 vorzusehen.

Wie in der Zeichnung dargestellt, sind im Bereich des nach oben offenen Kanals 20 Prallelemente 33 zum Umlenken des nach oben aus dem offenen Kanal 20 strömenden Brühmediums nach unten in Richtung des Geflügels G angeordnet. Die Prallelemente 33 können sich über einen Teil der Länge des Kanals 20 oder über die gesamte Länge erstrecken. Jedes Prallelement 33 kann zum Umlenken des Brühmediums zu der einen Seite (z.B. Transportstrecke 12.1) oder zu der anderen Seite (z.B. Transportstrecke 12.2) oder zu beiden Seiten (z.B. Transportstrecken 12.1 und 12.2) ausgebildet und eingerichtet sein. Die Prallelemente 33 sind vorzugsweise einfache Leitkörper oder dergleichen mit einer die Strömung unterstützenden, abgerundeten Innenfläche, die an einer der Trennwände 18, 19 angeordnet sind.

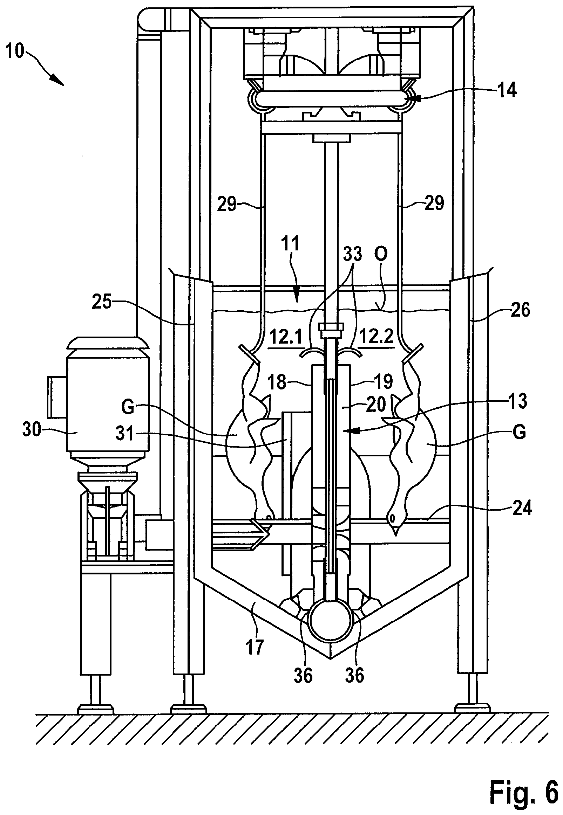

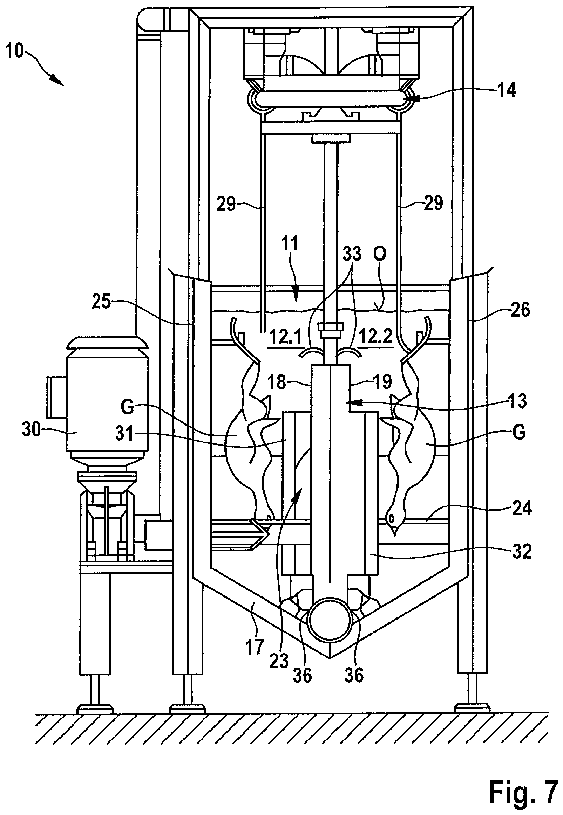

Jeweils zwei Trennwände 18, 19 bilden den Kanal 20, der bevorzugt U-förmig ausgebildet ist. Die Trennwände 18, 19 erstrecken sich von der Bodenwand 17 des Brühtanks 11 nach oben, und zwar bevorzugt bis unterhalb der Oberkante der Seitenwände 25, 26 des Brühtanks 11, so dass die Oberkanten der Trennwände 18, 19 bei maximalem Füllstand des Brühtanks 11 mit Brühmedium unterhalb der Oberfläche O des Brühmediums liegen (siehe z.B. Figuren 6 und 7). Optional und bevorzugt sind die Trennwände 18, 19 parallel beabstandet zueinander angeordnet. Sie können fest mit dem Brühtank 11 verbunden sein. Bevorzugt sind die Trennwände 18, 19 insbesondere zu Wartungs- und Reinigungszwecken jedoch schwenkbar ausgebildet. Dazu ist jede Trennwand 18, 19 im Bereich der Bodenwand 17 des Brühtanks 11 mit einem Scharnier 36 oder dergleichen zum Schwenken der Trennwände 18, 19 aus einer parallelen Betriebsstellung in eine V-förmige Wartungs- und/oder Reinigungsstellung und zurück versehen. Mit anderen Worten sind die Trennwände 18, 19 mittels eines Scharniers 36 oder dergleichen an der Bodenwand 17 befestigt. Mittels einer nicht dargestellten Arretiereinrichtung sind die Trennwände 18, 19 mindestens in ihrer Betriebsstellung fixierbar. Es besteht auch die Möglichkeit, dass nur eine der Trennwände 18,19 schwenkbar ausgebildet ist. Des Weiteren können auch nur Teile der Trennwände 18, 19 in ihrer horizontalen und/oder vertikalen Erstreckung schwenkbar oder klappbar ausgebildet und eingerichtet sein.

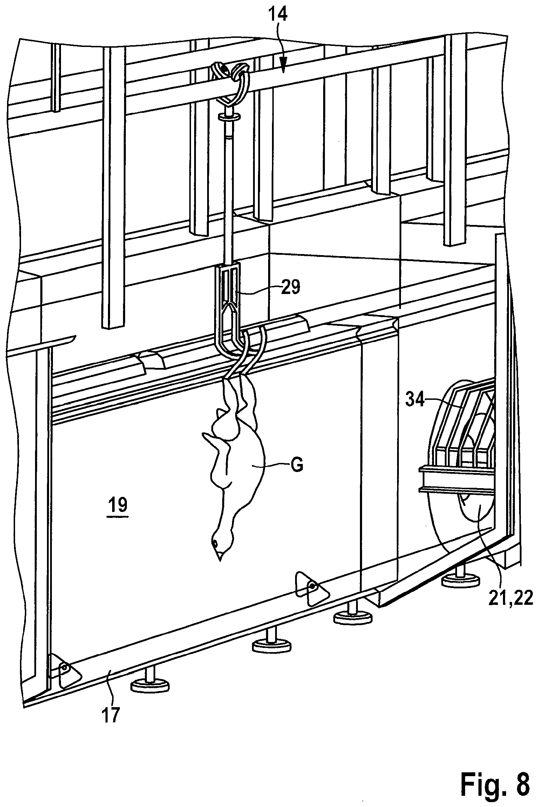

Wie bereits beschrieben, ist der Verwirbelungskörper 23 innerhalb des Kanals 20 angeordnet. Jeder Verwirbelungskörper 23, insbesondere für den Fall, dass der Verwirbelungskörper 23 ein einfacher Impeller oder Propeller ist, ist im Bereich der Durchbrüche 21, 22 gegenüber den Transportstrecken 12.1, 12.2...12.n durch ein für das Brühmedium durchlässiges Schutzelement 34 abgeschirmt. In der Figur 8 ist ein einfaches Schutzgitter dargestellt, das verhindert, dass das Geflügel G in direkten Kontakt mit dem Verwirbelungskörper 23 kommen kann. Vorzugsweise ist das Schutzelement 34 ausgebildet und eingerichtet, um auch die Antriebswelle 24, die sich quer durch die Transportstrecken 12.1, 12.2,....12.n und den oder jeden Kanal 20 erstreckt, gegenüber dem Geflügel G abzuschirmen.

Die Steuer- und Regeleinheit 15 zum Temperieren des Brühmediums kann an beliebiger Position innerhalb der Vorrichtung 10 angerordnet sein. Beispielsweise ist eine Anordnung der oder jeder Wärmequelle der Steuer- und Regeleinheit 15 innerhalb des Brühtanks 11 im Bereich der Transportstrecken 12.1, 12.2,...12.n möglich. Besonders bevorzugt ist die oder jede Wärmequelle der Steuer- und Regeleinheit 15 jedoch innerhalb des Kanals 20 angeordnet. Ebenso ist ein Sensor oder dergleichen der Steuer- und Regeleinheit 15 vorzugsweise innerhalb des Kanals 20 angeordnet.

Die Filtereinrichtung 35 zum Filtern des Brühmediums und/oder zum Kontrollieren und Regeln des Niveaus des Brühmediums innerhalb des Brühtanks 11, und damit innerhalb der Transportstrecken 12.1, 12.2,...12.n und der Kanäle 20 kann ebenfalls an beliebiger Position innerhalb der Vorrichtung 10 angeordnet sein. In der Ausführungsform gemäß Figur 2 ist die Filtereinrichtung 35 an der Stirnseite S_{B2} angeordnet. Die Filtereinrichtung 35 kann aber auch an der Stirnseite S_{B1} angeordnet sein, und zwar im Bereich der Stirnseite S_{K1} des Kanals 20, also am Ende des Trennelementes 13 zwischen den Förderschienen des Transportmittels 14.

Im Folgenden wird das erfindungsgemäße Verfahren zum Brühen von geschlachtetem Geflügel, das zur Vorbereitung des Entfiederns des Geflügels dient, anhand der Zeichnung näher erläutert.
Das an den Füßen hängende Geflügel G wird - vorzugsweise mit dem Rücken zur Trennwand 18, 19 weisend - durch einen mit Brühmedium mindestens teilweise gefüllten Brühtank 11 mittels eines Transportmittels 14 entlang einer Transportstrecke 12.1, 12.2,....12.n in Transportrichtung T transportiert. Damit das Brühmedium den gewünschten Effekt des Anlösens der Federn erzielt, wird das Brühmedium mittels einer Steuer- und Regeleinheit 15 auf die gewünschte Brühtemperatur temperiert und diese Brühtemperatur wird während des Betriebs auch gesteuert und geregelt. Während des Betriebs oder in Betriebsunterbrechungen wird das Brühmedium durch eine Filtereinrichtung 35 gereinigt. Um das Brühmedium möglichst effektiv mit dem Geflügel in Kontakt zu bringen, wird das Brühmedium mittels eines Mittels 16 zum Erzeugen einer Verwirbelung und/oder Strömung verwirbelt.

Erfindungsgemäß zeichnet sich das Verfahren dadurch aus, dass das Brühmedium in einem von der oder jeder Transportstrecke 12.1, 12.2,....12.n mindestens teilweise abgeschirmten Kanal 20 mittels eines Verwirbelungskörpers 23, der um eine horizontal gerichtete und quer zur Transportrichtung T verlaufende Antriebswelle 24 rotierend angetrieben wird, verwirbelt und dann wieder der oder jeder Transportstrecke 12.1, 12.2,....12.n zugeführt wird.

Dazu wird das Brühmedium vorzugsweise aus der oder jeder Transportstrecke 12.1, 12.2,...12.n mittels des Verwirbelungskörpers 23 in den Kanal 20 gesaugt, wodurch in dem Kanal 20 ein Überdruck erzeugt wird, der dafür sorgt, dass das Brühmedium an den Stirnseiten S_{K1}, S_{K2} und/oder an der Oberseite des Kanals 20 austritt und wieder den Transportstrecken 12.1, 12.2,....12.n zugeführt wird. Das aus den Stirnseiten S_{K1}, S_{K2} des Kanals 20 austretende Brühmedium wird vorzugsweise durch Umlenkelemente 31, 32 derart umgelenkt, dass das austretende Brühmedium in Transportrichtung T des Geflügels G strömt. Mit anderen Worten wir das Geflügel G stets mit der Strömungsrichtung des Brühmediums transportiert. Das nach oben aus dem Kanal 20 austretende Brühmedium kann durch Prallelemente 33 derart umgelenkt werden, dass das hängende Geflügel G durch das austretende Brühmedium gegen den Federwuchs von oben nach unten mit diesem beaufschlagt wird.

In einer ersten Ausführungsform wird das Geflügel G entlang der Transportstrecken 12.1, 12.2,....12.n durch einen nur gering mit Brühmedium befüllten Brühtank 11 transportiert, so dass das Geflügel G gar nicht oder nur geringfügig in das Brühmedium eintaucht und vollständig oder überwiegend durch das oben aus dem Kanal 20 strömende Brühmedium mit diesem beaufschlagt wird. Bei dieser Ausführungsform hängt das Geflügel G in den Transportstrecken, berührt das Brühmedium aber gar nicht bzw. taucht nur leicht, beispielsweise nur bis zum Hals, in das Brühmedium ein, um die beim Transport durch das Brühmedium entstehende Rückhaltekraft zu vermeiden bzw. sehr gering zu halten. Das Brühmedium weist lediglich ein solches Niveau in dem Brühtank 11 auf, dass es mittels des Verwirbelungskörpers 23, insbesondere mittels der Vortex-Wasserturbine, in den Kanal 20 gesaugt und aus diesem über die Prallelemente 33 von oben nach unten über das Geflügel G zurückgeführt wird. In diesem Fall erfolgt das Brühen im Wesentlichen durch das oben aus dem Kanal 20 strömende Brühmedium.

Alternativ wird das Geflügel G entlang der Transportstrecken 12.1, 12.2,....12.n durch einen voll mit Brühmedium befüllten Brühtank 11 transportiert, so dass das Geflügel G vollständig in das Brühmedium eintaucht und durch das in den Transportstrecken 12.1, 12.2,...12.n stehende und durch das oben und/oder an den Stirnseiten aus dem Kanal 20 strömende Brühmedium mit diesem beaufschlagt (siehe z.B. Figuren 6 und 7). Das aus dem Kanal 20 strömende Brühmedium bewirkt eine Verwirbelung des in den Transportstrecken 12.1, 12.2,...12.n stehenden Brühmediums, so dass eine besonders effektive Beaufschlagung des Geflügels G mit Brühmedium sichergestellt ist.

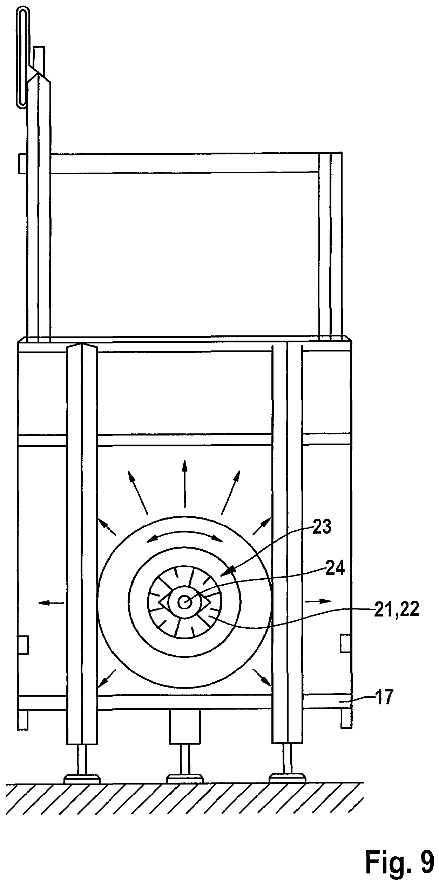

Vorzugsweise wird das Brühmedium innerhalb des Kanals 20 durch die Steuer- und Regeleinheit 15 temperiert, wobei sich das in dem Kanal 20 temperierte Brühmedium beim Ausströmen aus dem Kanal 20 mit dem in den Transportstrecken 12.1, 12.2,...12.n befindlichen Brühmedium vermischt und diese Brühmediummischung dann auf das Geflügel G trifft. In der Figur 9 ist schematisch angedeutet, welchen Effekt der Verwirbelungskörper 23 und insbesondere die Vortex-Wasserturbine aufweist, nämlich eine Verwirbelung des Brühmediums derart, dass das Brühmedium innerhalb des Kanals 20 unter Erzeugung eines Überdrucks gleichmäßig in alle Richtungen gelenkt wird.

Besonders eignet sich die erfindungsgemäße Vorrichtung 10 zur Durchführung des Verfahrens.

## Patentansprüche

1. Vorrichtung (10), ausgebildet und eingerichtet zum Brühen von geschlachtetem Geflügel G, umfassend einen länglichen, nach oben offenen Brühtank (11) zur Aufnahme und zum Halten eines Brühmediums mit mindestens einer Transportstrecke (12.1, 12.2,....12.n) für das Geflügel G, wobei jede Transportstrecke (12.1, 12.2,....12.n) in ihrer Längserstreckung an ein sich mindestens über einen Teil der Länge der Transportstrecke (12.1, 12.2....12.n) erstreckendes Trennelement (13) grenzt, ein oberhalb des Brühtanks (11) angeordnetes Transportmittel (14) zum Transport des an den Füßen aufgehängten Geflügels G entlang der Transportstrecke (12.1, 12.2,....12.n) in Transportrichtung T, eine Steuer- und Regeleinheit (15) zum Temperieren des Brühmediums, Mittel (16) zum Erzeugen einer Verwirbelung und/oder Strömung des Brühmediums sowie eine Filtereinrichtung (35) zum Reinigen des Brühmediums, wobei jedes Trennelement (13) zwei beabstandet zueinander angeordnete und sich von der Bodenwand (17) des Brühtanks (11) nach oben erstreckende Trennwände (18, 19) zur Bildung eines nach oben und zu den Stirnseiten hin offenen Kanals (20) umfasst, und innerhalb des Kanals(20) im Bereich von Durchbrüchen (21, 22) in jeder einer Transportstrecke (12.1, 12.2,....12.n) zugewandten Trennwand (18, 19) ein Verwirbelungskörper (23) als Mittel (16) zur Erzeugung der Verwirbelung und/oder Strömung des Brühmediums angeordnet ist, der mittels einer horizontal gerichteten und quer zur Transportrichtung T des Geflügels G verlaufenden Antriebswelle (24) rotierend antreibbar ist.

2. Vorrichtung (10) nach Anspruch 1, **dadurch gekennzeichnet, dass** in dem Brühtank (11) mindestens zwei parallel verlaufende Transportstrecken (12.1, 12.2,....12.n) ausgebildet sind, die in ihrer Längserstreckung durch das Trennelement (13) mindestens teilweise voneinander getrennt sind.

3. Vorrichtung (10) nach Anspruch 1 oder 2, **dadurch gekennzeichnet, dass** in dem Brühtank (11) mehr als zwei parallel verlaufende Transportstrecken (12.1, 12.2,....12.n) ausgebildet sind, wobei zwei benachbarte Transportstrecken (12.1, 12.2,....12.n) jeweils durch ein Trennelement (13) mindestens teilweise voneinander getrennt sind.

4. Vorrichtung (10) nach einem oder mehreren der Ansprüche 1 bis 3, **dadurch gekennzeichnet, dass** der Verwirbelungskörper (23) mindestens einen Impeller, Propeller oder dergleichen umfasst.

5. Vorrichtung (10) nach einem oder mehreren der Ansprüche 1 bis 4, **dadurch gekennzeichnet, dass** der Verwirbelungskörper (23) mindestens zwei Impeller, Propeller oder dergleichen umfasst, die auf derselben Antriebswelle (24) angeordnet sind.

6. Vorrichtung (10) nach einem oder mehreren der Ansprüche 1 bis 5, **dadurch gekennzeichnet, dass** an beiden Stirnseiten jedes Kanals (20) im Bereich der Trennwände (18, 19) jeweils mindestens ein Umlenkelement (31, 32) zum Umlenken des an den Stirnseiten aus dem Kanal (20) strömenden Brühmediums in Transportrichtung T des Geflügels angeordnet ist.

7. Vorrichtung (10) nach einem oder mehreren der Ansprüche 1 bis 6, **dadurch gekennzeichnet, dass** im Bereich des nach oben offenen Kanals (20) Prallelemente (33) zum Umlenken des nach oben aus dem Kanal (20) strömenden Brühmediums nach unten in Richtung des Geflügels angeordnet sind.

8. Vorrichtung (10) nach Anspruch 7, **dadurch gekennzeichnet, dass** sich die Prallelemente (33) im Wesentlichen über die gesamte Länge des Kanals (20) erstrecken und wahlweise zum Umlenken des Brühmediums aus dem Kanal (20) zu der einen und/oder zu der anderen Transportstrecke (12.1, 12.2,....12.n) ausgebildet und eingerichtet sind.

9. Vorrichtung (10) nach einem oder mehreren der Ansprüche 1 bis 8, **dadurch gekennzeichnet, dass** die beiden einen Kanal (20) bildenden Trennwände (18, 19) zu Wartungs- und/oder Reinigungszwecken schwenkbar ausgebildet sind.

10. Vorrichtung (10) nach Anspruch 9, **dadurch gekennzeichnet, dass** jede Trennwand (18, 19) im Bereich der Bodenwand (17) des Brühtanks (11) mit einem Scharnier (36) oder dergleichen zum Schwenken der Trennwände (18, 19) aus einer parallelen Betriebsstellung in eine V-förmige Wartungs- und/oder Reinigungsstellung und zurück versehen ist.

11. Vorrichtung (10) nach einem oder mehreren der Ansprüche 1 bis 10, **dadurch gekennzeichnet, dass** jeder Verwirbelungskörper (23) im Bereich der Durchbrüche (21, 22) gegenüber den Transportstrecken (12.1, 12.2,....12.n) durch ein für das Brühmedium durchlässiges Schutzelement (34) abgeschirmt ist.

12. Vorrichtung (10) nach einem oder mehreren der Ansprüche 1 bis 11, **dadurch gekennzeichnet, dass** mindestens eine Wärmequelle der Steuer- und Regeleinheit (15) zum Temperieren des Brühmediums innerhalb des Kanals (20) angeordnet ist.

13. Verfahren zum Brühen von geschlachtetem Geflügel, mit den Schritten:
- Transportieren des Geflügels G an den Füßen hängend durch einen mit Brühmedium mindestens teilweise gefüllten Brühtank (11) mittels eines Transportmittels (14) entlang einer Transportstrecke (12.1, 12.2,....12.n) in Transportrichtung T,
- Temperieren des Brühmediums mittels einer Steuer- und Regeleinheit (15),
- Reinigen des Brühmediums mittels einer Filtereinrichtung (35), und
- Verwirbeln des Brühmediums mittels eines Mittels (16) zum Erzeugen einer Verwirbelung und/oder Strömung,
wobei das Brühmedium in einem von der oder jeder Transportstrecke (12.1, 12.2,....12.n) mindestens teilweise abgeschirmten Kanal (20) mittels eines Verwirbelungskörpers (23), der um eine horizontal gerichtete und quer zur Transportrichtung T verlaufende Antriebswelle (24) rotierend angetrieben wird, verwirbelt und dann wieder der oder jeder Transportstrecke (12.1, 12.2,....12.n) zugeführt wird.

14. Verfahren nach Anspruch 13, **dadurch gekennzeichnet, dass** das Brühmedium aus der oder jeder Transportstrecke mittels des Verwirbelungskörpers (23) in den Kanal (20) gesaugt und dadurch in dem Kanal (20) ein Überdruck erzeugt wird, der dafür sorgt, dass das Brühmedium an den Stirnseiten und/oder an der Oberseite des Kanals(20) austritt und wieder den Transportstrecken (12.1, 12.2,....12.n) zugeführt wird.

15. Verfahren nach Anspruch 14, **dadurch gekennzeichnet, dass** das aus den Stirnseiten des Kanals (20) austretende Brühmedium durch Umlenkelemente (31, 32) derart umgelenkt wird, dass das austretende Brühmedium in Transportrichtung T des Geflügels G strömt.

16. Verfahren nach einem oder mehreren der Ansprüche 13 bis 15, **dadurch gekennzeichnet, dass** das nach oben aus dem Kanal (20) austretende Brühmedium durch Prallelemente (33) derart umgelenkt wird, dass das hängende Geflügel G durch das austretende Brühmedium von oben nach unten mit diesem beaufschlagt wird.

17. Verfahren nach einem oder mehreren der Ansprüche 13 bis 16, **dadurch gekennzeichnet, dass** das Geflügel G entlang der Transportstrecken (12.1, 12.2,....12.n) durch einen nur gering mit Brühmedium befüllten Brühtank (11) transportiert wird, so dass das Geflügel G gar nicht oder nur geringfügig in das Brühmedium eintaucht und vollständig oder überwiegend durch das oben aus dem Kanal (20) strömende Brühmedium mit diesem beaufschlagt wird.

18. Verfahren nach einem oder mehreren der Ansprüche 13 bis 16, **dadurch gekennzeichnet, dass** das Geflügel G entlang der Transportstrecken (12.1, 12.2,....12.n) durch einen voll mit Brühmedium befüllten Brühtank (11) transportiert wird, so dass das Geflügel G vollständig in das Brühmedium eintaucht und durch das in den Transportstrecken (12.1, 12.2,...12.n) stehende und durch das oben und/oder an den Stirnseiten aus dem Kanal (20) strömende Brühmedium mit diesem beaufschlagt.

19. Verfahren nach einem oder mehreren der Ansprüche 13 bis 18, **dadurch gekennzeichnet, dass** das Brühmedium innerhalb des Kanals (20) durch die Steuer- und Regeleinheit (15) temperiert wird, wobei sich das in dem Kanal (20) temperierte Brühmedium beim Ausströmen aus dem Kanal (20) mit dem in den Transportstrecken (12.1, 12.2,...12.n) befindlichen Brühmedium vermischt und diese Brühmediummischung dann auf das Geflügel G trifft.

20. Verfahren nach einem oder mehreren der Ansprüche 13 bis 19, **dadurch gekennzeichnet, dass** es mit einer Vorrichtung nach einem der Ansprüche 1 bis 12 ausgeführt wird.

## Claims

1. Apparatus (10), configured and adapted for scalding slaughtered poultry G, comprising a linear scalding tank (11) open at the top for receiving and holding a scalding medium, with at least one transport line (12.1, 12.2, ... 12.n) for the poultry G, wherein each transport line (12.1, 12.2, ... 12.n) in its longitudinal extension borders a partition element (13) extending over at least part of the length of the transport line (12.1, 12.2, ... 12.n), a transport means (14) arranged above the scalding tank (11) for transporting the poultry G suspended by the feet along the transport line (12.1, 12.2, ... 12.n) in the transport direction T, a control and regulating unit (15) for tempering the scalding medium, means (16) for generating a turbulence and/or flow in the scalding medium, and a filtering device (35) for cleaning the scalding medium, wherein each partition element (13) comprises two partition walls (18, 19) spaced apart from each other and extending upward from the base wall (17) of the scalding tank (11) to form a channel (20) open at the top and at the end sides, and inside the channel (20) in the region of openings (21, 22) in each partition wall (18, 19) facing a transport line (12.1, 12.2, ... 12.n), a turbulence-generating body (23) is arranged as a means (16) for creating turbulence and/or flow in the scalding medium, which can be driven in rotation by means of a horizontally oriented drive shaft (24) running transversely to the transport direction T of the poultry G.

2. Apparatus (10) according to claim 1, **characterised in that** at least two parallel transport lines (12.1, 12.2, ... 12.n) are formed in the scalding tank (11) which are at least partially separated from each other in their longitudinal extension by the partition element (13).

3. Apparatus (10) according to claim 1 or 2, **characterised in that** more than two parallel transport lines (12.1, 12.2, ... 12.n) are formed in the scalding tank (11), wherein two adjacent transport lines (12.1, 12.2, ... 12.n) are in each case at least partially separated from each other by a partition element (13).

4. Apparatus (10) according to one or more of claims 1 to 3, **characterised in that** the turbulence-generating body (23) comprises at least one impeller, propeller or similar.

5. Apparatus (10) according to one or more of claims 1 to 4, **characterised in that** the turbulence-generating body (23) comprises at least two impellers, propellers or similar arranged on the same drive shaft (24).

6. Apparatus (10) according to one or more of claims 1 to 5, **characterised in that** at both ends of each channel (20) in the region of the partition walls (18, 19), at least one deflection element (31, 32) is arranged for deflecting the scalding medium flowing out of the channel (20) at the ends in the transport direction T of the poultry.

7. Apparatus (10) according to one or more of claims 1 to 6, **characterised in that** in the region of the channel open at the top (20), impact elements (33) are arranged for deflecting the scalding medium flowing up out of the channel (20), to flow down in the direction of the poultry.

8. Apparatus (10) according to claim 7, **characterised in that** the impact elements (33) extend substantially over the entire length of the channel (20) and are configured and adapted to deflect the scalding medium from the channel (20) optionally into the one and/or the other transport line (12.1, 12.2, ... 12.n).

9. Apparatus (10) according to one or more of claims 1 to 8, **characterised in that** the two partition walls (18, 19) forming a channel (20) are configured pivotably for maintenance and/or cleaning purposes.

10. Apparatus (10) according to claim 9, **characterised in that** each partition wall (18, 19) is fitted with a hinge (36) or similar in the region of the base wall (17) of the scalding tank (11) for pivoting of the partition walls (18, 19) out of a parallel operating position into a V-shaped maintenance and/or cleaning position and back.

11. Apparatus (10) according to one or more of claims 1 to 10, **characterised in that** each turbulence-generating body (23) is shielded from the transport lines (12.1, 12.2, ... 12.n) in the region of the openings (21, 22) by a protective element (34) which is permeable to the scalding medium.

12. Apparatus (10) according to one or more of claims 1 to 11, **characterised in that** at least one heat source of the control and regulating unit (15) is arranged inside the channel (20) for tempering the scalding medium.

13. Method for scalding slaughtered poultry with the steps:
- transport of the poultry G hanging by the feet through a scalding tank (11) which is at least partially filled with scalding medium, by a transport means (14) along a transport line (12.1, 12.2, ... 12.n) in transport direction T,
- tempering of the scalding medium by means of a control and regulating unit (15),
- cleaning of the scalding medium by means of a filter device (35), and
- generation of turbulence in the scalding medium by a means (16) for generating turbulence and/or flow,
wherein turbulence is generated in the scalding medium in a channel (20) which is at least partially shielded from the or each transport line (12.1, 12.2, ... 12.n), by means of a turbulence-generating body (23) which is rotatably driven by a horizontally oriented drive shaft (24) running transversely to the transport direction T, and the scalding medium is then returned to the or each transport line (12.1, 12.2, ... 12.n).

14. Method according to claim 13, **characterised in that** the scalding medium is drawn from the or each transport line into the channel (20) by means of the turbulence-generating body (23), and thereby a positive pressure is produced in the channel (20) which ensures that the scalding medium emerges at the end sides and/or top of the channel (20) and is returned to the transport lines (12.1, 12.2, ... 12.n).

15. Method according to claim 14, **characterised in that** the scalding medium emerging from the end sides of the channel (20) is deflected by deflection elements (31, 32) such that the emerging scalding medium flows in the transport direction T of the poultry G.

16. Method according to one or more of claims 13 to 15, **characterised in that** the scalding medium emerging up out of the channel (20) is deflected by impact elements (33) such that the suspended poultry G is charged with the emerging medium from top to bottom.

17. Method according to one or more of claims 13 to 15, **characterised in that** the poultry G is transported along the transport lines (12.1, 12.2, ... 12.n) through a scalding tank (11) which is only partly filled with scalding medium, so that the poultry G is not immersed or is only partly immersed in the scalding medium and is completely or mainly charged with the scalding medium flowing up out of the channel (20).

18. Method according to one or more of claims 13 to 16, **characterised in that** the poultry G is transported along the transport lines (12.1, 12.2, ... 12.n) through a scalding tank (11) which is completely filled with scalding medium, so that the poultry G is immersed completely in the scalding medium and is charged with the scalding medium standing in the transport lines (12.1, 12.2, ... 12.n) and by the scalding medium flowing up and/or at the end sides out of the channel (20).

19. Method according to one or more of claims 13 to 18, **characterised in that** the scalding medium inside the channel (20) is tempered by the control and regulating unit (15), wherein on flowing out from the channel (20), the scalding medium tempered in the channel (20) is mixed with the scalding medium present in the transport lines (12.1, 12.2, ... 12.n) and this mixture of scalding medium then hits the poultry G.

20. Method according to one or more of claims 13 to 19, **characterised in that** it is carried out with an apparatus according to any of claims 1 to 12.

## Revendications

1. Dispositif (10) configuré et agencé pour échauder de la volaille abattue G, comprenant une cuve d'échaudage (11) allongée et ouverte vers le haut pour recevoir et maintenir un moyen d'échaudage avec au moins un trajet de transport (12.1, 12.2, ..., 12.n) pour la volaille G, chaque trajet de transport (12.1, 12.2, ..., 12.n) aboutissant dans son étendue longitudinale à un élément de séparation (13) s'étendant sur au moins une partie de la longueur du trajet de transport (12.1, 12.2, ..., 12.n), un moyen de transport (14) disposé au-dessus de la cuve d'échaudage (11), pour le transport de la volaille G suspendue par les pattes, le long du trajet de transport (12.1, 12.2, ..., 12.n) dans la direction de transport T, une unité de commande et de régulation (15) pour tempérer le moyen d'échaudage, des moyens (16) pour engendrer un tourbillonnement et/ou un courant du moyen d'échaudage, ainsi qu'un dispositif de filtrage (35) pour nettoyer le moyen d'échaudage, chaque élément de séparation (13) comprenant deux parois de séparation (18, 19) espacées l'une de l'autre et s'étendant à partir de la paroi de fond (17) de la cuve d'échaudage (11) vers le haut pour former un canal (20) ouvert vers le haut et vers les faces frontales, et, à l'intérieur du canal (20) dans la zone d'ouvertures (21, 22), dans chaque paroi de séparation (18, 19) en regard d'un trajet de transport (12.1, 12.2, ..., 12.n), un corps de tourbillonnement (23) étant disposé comme moyen (16) pour engendrer le tourbillonnement et/ou le courant du moyen d'échaudage, lequel corps est adapté pour pouvoir être entraîné en rotation par un arbre d'entraînement (24) orienté horizontalement et s'étendant transversalement à la direction de transport T de la volaille G.

2. Dispositif (10) selon la revendication 1, **caractérisé en ce que** dans la cuve d'échaudage (11), au moins deux trajets de transport (12.1, 12.2, ..., 12.n) parallèles sont formés qui sont séparés les uns des autres dans leur étendue longitudinale au moins partiellement par l'élément de séparation (13).

3. Dispositif (10) selon la revendication 1 ou 2, **caractérisé en ce que** dans la cuve d'échaudage (11), plus que deux trajets de transport (12.1, 12.2, ..., 12.n) parallèles sont formés, deux trajets de transport (12.1, 12.2, ..., 12.n) avoisinants étant séparés respectivement l'un de l'autre au moins partiellement par un élément de séparation (13).

4. Dispositif (10) selon une ou plusieurs des revendications 1 à 3, **caractérisé en ce que** le corps de tourbillonnement (23) comprend au moins une turbine, une hélice ou semblable.

5. Dispositif (10) selon une ou plusieurs des revendications 1 à 4, **caractérisé en ce que** le corps de tourbillonnement (23) comprend au moins deux turbines, hélices ou semblables qui sont disposées sur le même arbre d'entraînement (24).

6. Dispositif (10) selon une ou plusieurs des revendications 1 à 5, **caractérisé en ce qu'**aux deux faces frontales de chaque canal (20), dans la zone des parois de séparation (18, 19), au moins un élément de déviation (31, 32) respectif est disposé pour dévier le moyen d'échaudage sortant du canal (20) aux faces frontales dans la direction de transport T de la volaille.

7. Dispositif (10) selon une ou plusieurs des revendications 1 à 6, **caractérisé en ce que** dans la zone du canal (20) ouvert vers le haut, des éléments d'impact (33) sont disposés pour dévier vers le bas en direction de la volaille, le moyen d'échaudage sortant du canal (20) vers le haut.

8. Dispositif (10) selon la revendication 7, **caractérisé en ce que** les éléments d'impact (33) s'étendent essentiellement sur la longueur entière du canal (20) et sont configurés et agencés au choix pour dévier le moyen d'échaudage sortant du canal (20) vers l'une et/ou vers l'autre trajet de transport (12.1, 12.2, ..., 12.n).

9. Dispositif (10) selon une ou plusieurs des revendications 1 à 8, **caractérisé en ce que** les deux parois de séparation (18, 19) formant un canal (20) sont configurés pivotant pour des fins d'entretien et/ou de nettoyage.

10. Dispositif (10) selon la revendication 9, **caractérisé en ce que** chaque paroi de séparation (18, 19) est pourvue, dans la zone de la paroi de fond (17) de la cuve d'échaudage (11), d'une charnière (36) ou semblable pour pivoter les parois de séparation (18, 19) d'une position parallèle de fonctionnement vers une position en Vé d'entretien et/ou de nettoyage et retour.

11. Dispositif (10) selon une ou plusieurs des revendications 1 à 10, **caractérisé en ce que** chaque corps de tourbillonnement (23) est protégé dans la zone des ouvertures (21, 22), des trajets de transport (12.1, 12.2, ..., 12.n) par un élément de protection (34) perméable au moyen d'échaudage.

12. Dispositif (10) selon une ou plusieurs des revendications 1 à 11, **caractérisé en ce qu'**au moins une source de chaleur de l'unité de commande et de régulation (15) est disposée à l'intérieur du canal (20) pour tempérer le moyen d'échaudage.

13. Procédé d'échaudage de volaille abattue, avec les étapes
- transporter la volaille G suspendue par ses pattes, à travers une cuve d'échaudage (11) au moins partiellement remplie d'un moyen d'échaudage, le long d'un trajet de transport (12.1, 12.2, ..., 12.n) dans la direction de transport T à l'aide d'un moyen de transport (14),
- tempérer le moyen d'échaudage à l'aide d'une unité de commande et de régulation (15),
- nettoyer le moyen d'échaudage à l'aide d'un dispositif de filtrage (35) et
- tourbillonner le moyen d'échaudage à l'aide d'un moyen (16) pour engendrer un tourbillonnement et/ou un courant,
le moyen d'échaudage étant tourbillonné dans un canal (20) protégé au moins partiellement du ou de chaque trajet de transport (12.1, 12.2, ..., 12.n), à l'aide d'un corps de tourbillonnement (23) qui est entraîné en rotation autour d'un arbre d'entraînement (24) orienté horizontalement et s'étendant transversalement à la direction de transport T, et étant ensuite réacheminé au ou à chaque trajet de transport (12.1, 12.2, ..., 12.n).

14. Procédé selon la revendication 13, **caractérisé en ce que** le moyen d'échaudage est aspiré du ou de chaque trajet de transport dans le canal (20) à l'aide du corps de tourbillonnement (23) et **en ce que**, par cela, une surpression est engendrée dans le canal (20) qui fait en sorte que le moyen d'échaudage sorte aux faces frontales et/ou à la face supérieure du canal (20) et soit réacheminé aux trajets de transport (12.1, 12.2, ..., 12.n).

15. Procédé selon la revendication 14, **caractérisé en ce que** le moyen d'échaudage sortant des faces frontales du canal (20) est dévié par des éléments de déviation (31, 32) de façon que le moyen d'échaudage sortant coule dans la direction de transport T de la volaille G.

16. Procédé selon une ou plusieurs des revendications 13 à 15, **caractérisé en ce que** le moyen d'échaudage sortant du canal (20) par le haut est dévié par des éléments d'impact (33) de façon que la volaille G suspendue soit soumise, par le moyen d'échaudage sortant, à celui-ci d'en haut en bas.

17. Procédé selon une ou plusieurs des revendications 13 à 16, **caractérisé en ce que** la volaille G est transportée le long des trajets de transport (12.1, 12.2, ..., 12.n) à travers une cuve d'échaudage (11) seulement faiblement remplie d'un moyen d'échaudage, si bien que la volaille G ne plonge pas du tout ou seulement un peu dans le moyen d'échaudage et soit entièrement ou principalement soumis à celui-ci par le moyen d'échaudage sortant du canal (20) par le haut.

18. Procédé selon une ou plusieurs des revendications 13 à 16, **caractérisé en ce que** la volaille G est transportée le long des trajets de transport (12.1, 12.2, ..., 12.n) à travers une cuve d'échaudage (11) entièrement remplie d'un moyen d'échaudage, si bien que la volaille G plonge entièrement dans le moyen d'échaudage et soit soumis à celui-ci par le moyen d'échaudage se trouvant dans les trajets de transport (12.1, 12.2, ..., 12.n) et sortant vers le haut et/ou aux faces frontales du canal (20).

19. Procédé selon une ou plusieurs des revendications 13 à 18, **caractérisé en ce que** le moyen d'échaudage est tempéré à l'intérieur du canal (20) à l'aide de l'unité de commande et de régulation (15), le moyen d'échaudage tempéré dans le canal (20) se mélangeant, lors de sa sortie du canal (20), au moyen d'échaudage se trouvant dans les trajets de transport (12.1, 12.2, ..., 12.n) et ce mélange de moyens d'échaudage arrivant ensuite sur la volaille G.

20. Procédé selon une ou plusieurs des revendications 13 à 19, **caractérisé en ce qu'**il est mis en oeuvre à l'aide d'un dispositif selon l'une des revendications 1 à 12.
